# EUROPÄISCHE PATENTSCHRIFT

(11) **EP 0 493 680 B1**
(45) Veröffentlichungstag und Bekanntmachung des Hinweises auf die Patenterteilung: **30.03.1994**
(21) Anmeldenummer: 91120255.4
(22) Anmeldetag: 27.11.1991
(51) Int. Cl.: F01N 7/08, F16L 27/10

(54) **Flexibles Leitungselement für Abgasleitungen von Verbrennungsmotoren bei Kraftfahrzeugen**
Flexible conduit element for exhaust conduits of internal combustion engines for vehicles
Elément de conduite flexible pour tuyaux d'échappement de moteurs à combustion interne pour véhicules

(30) Priorität: 31.12.1990 DE 4042291
(43) Veröffentlichungstag der Anmeldung: 08.07.1992
(73) Patentinhaber: Witzenmann GmbH Metallschlauch-Fabrik Pforzheim, D-75175 Pforzheim (DE)
(72) Erfinder: Lange, Wolfgang, D-7530 Pforzheim (DE); Leidig, Hans-Jürgen, D-7130 Mühlacker (DE); Schüttler, Peter, D-7532 Niefern 2 (DE); Wünschmann, Manfred, Dipl.-Ing., D-7507 Pfinztal 2 (DE)
(74) Vertreter: Lemcke, Rupert, Dipl.-Ing.

(56) Entgegenhaltungen:
- EP-A- 0 282 689
- DE-A- 3 702 243
- US-A- 2 444 988
- US-A- 3 029 094
- PATENT ABSTRACTS OF JAPAN vol. 8, no. 274 (M-345)(1711) 14. Dezember 1984 & JP-A-59 145 321 (TOYOTA JIDOSHA) 20. August 1984

## Beschreibung

Die Erfindung betrifft ein flexibles Leitungselement für Abgasleitungen von Verbrennungsmotoren bei Kraftfahrzeugen mit einem mit zylindrischen Anschlußenden versehenen, schraubengangförmig oder ringgewellten Balg aus Metall und einem den Balg unmittelbar umgebenden ersten Geflechtsschlauch aus Metalldraht, wobei gegebenenfalls Balg und erster Geflechtsschlauch endständig zur Bildung der Anschlußenden des Leitungselementes innerhalb eines zylindrischen Stützringes miteinander und mit diesem verpreßt und die Teile gegenseitig durch Anheften verbunden sind, und mit einem koaxial innerhalb des Balges angeordneten, gegebenenfalls ohne Dichtungseinlage gewickelten Metallschlauch, dessen Außenquerschnitt kleiner als der lichte Innenquerschnitt des Balges ist und der an seinen innerhalb der Balganschlußenden gelegenen und mit diesen bündig abschließenden Endstücken unter Zusammendrücken des Schlauchprofils und Ausgleich der Toleranzen gegenüber dem Balganschlußenden radial aufgeweitet ist.

Ein Leitungselement dieser Gattung ist Gegenstand der EP-A-0 410 089. Es wird in der Regel als Zwischenstück in die im übrigen weitgehend starre Abgasleitung eingebaut, um Bewegungen und Schwingungen aufzunehmen und von der Weiterleitung an benachbarte Bauteile abzukoppeln, wie sie von der elastisch gelagerten Antriebsmaschine, Erschütterungen des Fahrzeuges, temperaturbedingten Längenänderungen etc. entstehen. Dabei gilt neben der Eigenschaft der Flexibilität die Aufmerksamkeit der Frage der Wärmedämmung, der Schalladsorption und der Dichtigkeit gegen Austritt von Abgasen, insbesondere in Verbindung mit Katalysatorfahrzeugen und verschärften Bestimmungen hinsichtlich Schall- und Abgasemissionen

Das bekannte Leitungselement hat in jeder Beziehung die von ihm erwarteten Gebrauchseigenschaften. Andererseits hat sich jedoch gezeigt, daß in besonderen Fällen seine Schwingungsdämpfung erhöht werden muß.

Um dieser Problematik zu begegnen, ist es bereits Gegenstand EP-A-0 432 436, wenigstens ein zum ersten Geflechtsschlauch bewegliches, flexibles Dämpfungsglied an den ersten Geflechtsschlauch in Anlage zu bringen. Dieser Lösungsweg bedingt jedoch eine an der Außenseite des Leitungselementes vorzusehende und damit in Radialrichtung platzgreifende Maßnahme, die außerdem von außen eingetragenen Verschmutzungen und damit einhergehenden Beeinträchtigungen ausgesetzt ist. Außerdem ergibt sich im Aufbau eine gewisse Komplikation und es sind zusätzliche konstruktive Maßnahmen erforderlich, die weitere Kosten verursachen.

Aufgabe der Erfindung ist es daher, ausgehend von einem Leitungselement der eingangs genannten Art, dieses mit einer zusätzlichen Dämpfung auszurüsten, die ohne zusätzlichen Platzbedarf eine deutliche Erhöhung der Dämpfungseigenschaften des Leitungselementes garantiert, wobei eine besonders einfache und billige Konstruktion angestrebt ist.

Diese Aufgabe ist erfindungsgemäß dadurch gelöst, daß zwischen Balg und Metallschlauch wenigstens ein zweiter Geflechtsschlauch angeordnet und mit wenigstens einem seiner Enden innerhalb des zugeordneten Balganschlußendes festgelegt ist.

Diese erfindungsgemäßen Maßnahmen haben grundsätzlich die Wirkung, daß der zweite Geflechtsschlauch in dem ohnehin vorhandenen Platz zwischen Balg und Metallschlauch angeordnet ist, also die äußeren Abmaße des Leitungselementes nicht beeinflußt. Darüber hinaus ist der zweite Geflechtsschlauch von äußeren Einflüssen in Form von Verunreinigungen etc. befreit, da er durch Balg und Metallschlauch quasi gekapselt ist. Seine Wirkung entfaltet sich durch Reibung gegenüber dem Balg und/oder Metallschlauch je nachdem, in welchem Belastungszustand bzw. Auslenkungszustand sich das Leitungselement befindet, in dem der zweite Geflechtsschlauch dabei entweder am Balg oder am Metallschlauch in Anlage ist und durch Reibung gegenüber dem Teil, an dem er anliegt, seine Dämpfungswirkung entfaltet.

Nach einer Ausführungsform des Gegenstandes der Erfindung ist es zweckmäßig, daß der zweite Geflechtsschlauch zwischen Balg und Metallschlauch lose eingelegt und mit seinen beiden Enden innerhalb des jeweils zugeordneten Balganschlußendes festgelegt ist. Hier befindet sich also der zweite Geflechtsschlauch immer in einem bezüglich der Axialrichtung entspannten Zustand, wobei er sich bei axialen Stauchungen des Leitungselementes, also solchen Situationen, bei denen der erste Geflechtsschlauch sich nicht in axial vorgespanntem Zustand befindet, zwischen seinen Enden tonnenförmig aufwölbt und dadurch in Anlage an den Balg gerät, um mit diesem in schwingungsdämpfender Weise zusammenzuwirken. Findet eine angulare Auslenkung des Leitungselementes zwischen seinen Anschlußenden statt, so führt dies auf einer Seite zu einer Vergrößerung des Abstandes der Anschlußenden für den zweiten Geflechtsschlauch und auf der anderen Seite zu einer Verringerung dieser beiden Anschlußenden, was bedeutet, daß der zweite Geflechtsschlauch auf der einen Seite in Anlage an den Metallschlauch und auf der anderen in Anlage an den Balg kommt. Auch hier also die Schaffung eines dämpfenden Reibverbundes mit Metallschlauch bzw. Balg.

Nach einem anderen Lösungsweg kann vorteilhafterweise vorgesehen sein, daß der zweite Geflechtsschlauch aus zwei koaxial ineinander angeordneten, sich in Axialrichtung weitgehend überdeckenden und aneinander anliegenden Geflechtsschläuchen gebildet ist, von denen jeder mit einem seiner Enden an gegenüberliegenden Enden des Leitungselementes festgelegt ist.

Hier treten also die beiden den zweiten Geflechtsschlauch bildenden, koaxial ineinander angeordneten Geflechtsschläuche in gegenseitigen Reibverbund, durch den die ungehinderte axiale Beweglichkeit ihrer freien Enden gegeneinander gebremst und damit eine Dämpfungswirkung erzielt wird. Diese Bremsung führt außerdem dazu, daß auch hier die den zweiten Geflechtsschlauch bildenden beiden Geflechtsschläuche je nach Stauchung bzw. Biegung des Leitungselementes die vorbeschriebenen Bewegungen ausführen, also jeweils mit dem Metallschlauch bzw. Balg in dämpfende Berührung gelangen.

In allen Fällen ist es vorteilhaft, daß der zweite Geflechtsschlauch in die Wellen des Balges teilweise eingeformt ist. Damit ergibt sich ein erhöhter Kontaktbereich zwischen Balg und zweitem Geflechtsschlauch.

Andererseits kann in allen Fällen vorgesehen sein, daß zwischen zweitem Geflechtsschlauch und/oder Balg bzw. Metallschlauch eine hohlzylindrische Zwischenlage aus Metalldrahtgestricke, -gewirke oder dergleichen angeordnet ist. Ein solches Dämpfungspolster engt die Bewegung des zweiten Geflechtsschlauches weiter ein und erhöht dessen Reibungsverbund mit den benachbarten Teilen im Sinne einer Dämpfungserhöhung, wobei gleichzeitig durch die Zwischenlage eine weitere Wärmedämmung stattfindet.

Weitere Merkmale und Einzelheiten der Erfindung ergeben sich aus der nachfolgenden Beschreibung von Ausführungsformen, die in der Zeichnung dargestellt sind. In der Zeichnung zeigen:
- Fig. 1: ein Leitungselement in Seitenansicht, zur Hälfte axial geschnitten;
- Fig. 2 bis 4: die vergrößerten Einzelansichten II-IV gemäß Fig. 1;
- Fig. 5 und 6: das Leitungselement gemäß Fig. 1 in zwei unterschiedlichen Betriebspositionen;
- Fig. 7 bis 9: Abwandlungen des Leitungselementes gemäß Fig. 1 und
- Fig. 10: eine vergrößerte Einzelheit aus Fig. 9.

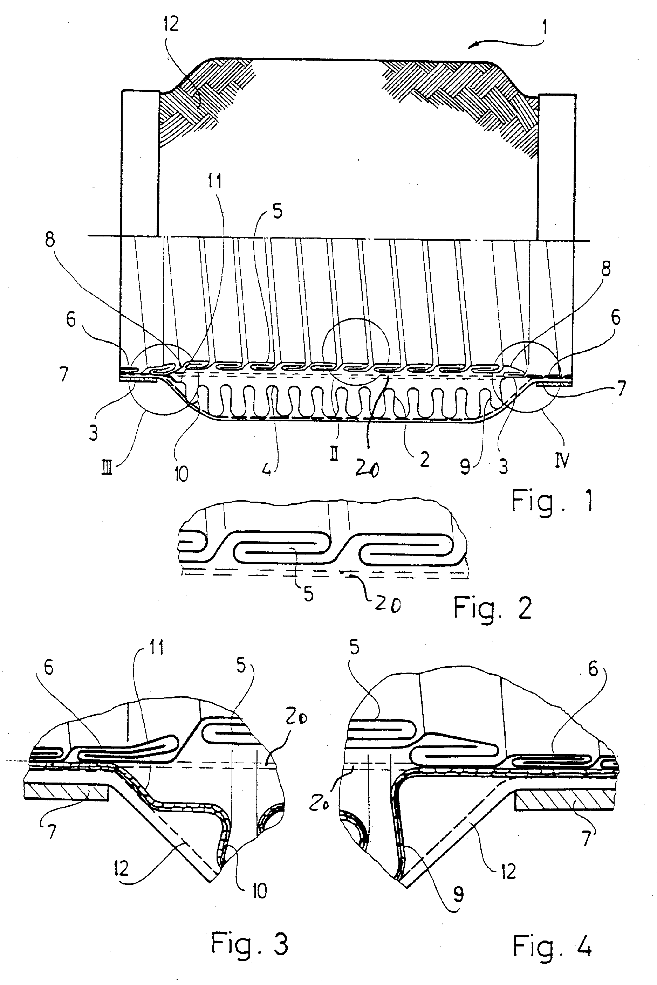

Wie aus Fig. 1 ersichtlich, besteht das insgesamt mit 1 bezeichnete Leitungselement aus einem schrauben- oder ringförmig gewellten Metallbalg 2 mit zylindrischen Balganschlußenden 3, deren Innendurchmesser kleiner als der Innendurchmesser der nach innen ragenden Balgwellen 4 ist.

In den Balg 2 ist ein schraubengangförmig gewickelter Metallschlauch, beispielsweise ein Agraffschlauch 5 eingesetzt, dessen Außendurchmesser kleiner als der Innendurchmesser der beiden Anschlußenden 3 ist.

An den gemeinsamen Enden sind die Balganschlußenden 3 und die Endstücke 6 des Metallschlauches 5 in Radialrichtung miteinander verpreßt, indem die Endstücke 6 unter Zusammendrücken des Wickelprofils des Metallschlauches 5 radial aufgeweitet sind, wobei gleichzeitig ein eventuelles Radialspiel des Metallschlauches 5 gegenüber den Balganschlußenden 3 überbrückt wird. Gleichzeitig sind von außen auf die Balganschlußenden 3 gesetzte Stützteile in Form von Stützringen 7 radial im Querschnitt verringert, so daß sich insgesamt im Ergebnis aus Endstücken 6, Balganschlußenden 3 und Stützringen 7 ein fest zusammengedrückter Abschlußverbund ergibt, der zum Anschweißen an eine weiterführende Rohrleitung eine genügend massive und dichte Stirnkante bietet.

Durch die radiale Aufweitung der Endstücke des Metallschlauches 5 ist gleichzeitig ein "Anschlag" 8 gebildet, der den Weg bestimmen kann, über den sich eine anschließende, hier nicht dargestellte Rohrleitung in das Leitungselement einstecken läßt. Damit ist gerade im Hinblick auf eine Serienfertigung eine besonders maßhaltige Weiterverarbeitung durch Verbindung mit anschließenden Leitungselementen sichergestellt.

Wie ferner aus Fig. 1 ersichtlich ist, geht der Balg 2 am rechten Ende über eine im Außendurchmesser reduzierte, endständige Balgwelle 9 in das Balganschlußende 3 über, womit ein besonders großer Querschnittssprung und die damit einhergehenden Belastungen vermieden sind.

Dem gleichen Zweck dient es, wenn auf der linken Seite der zeichnerischen Darstellung eine ebenfalls im äußeren Durchmesser reduzierte, endständige Balgwelle 10 über eine in Radialrichtung stufenförmig abgesetzte Querschnittsform 11 in das Balganschlußende 3 übergeht.

Der Balg ist außen durch ein Metalldrahtgeflecht 12 umgeben, das bei der Fertigung zwischen Balganschlußenden 3 und Stützhülsen 7 eingefangen und somit eingepreßt ist. Das Geflecht 12 bzw. der daraus gebildete Geflechtsschlauch dient in bekannter Weise der Verhinderung von unliebsamen Längenänderungen des Balges 2 unter mechanischer Beanspruchung. Außerdem dient die Umflechtung 12 dem mechanischen Schutz des Balges 2 vor Schlagbelastungen bzw. Verschmutzung sowie andererseits der Dämpfung von Resonanzschwingungen der Balgwellen.

Die Endstücke 6 des Metallschlauches 5 sind nicht nur durch radiales Verpressen aufgeweitet. Vielmehr ist die Ausbildung der Endstücke 6 gleichzeitig in einem Zustand vorgenommen, bei dem die Windungen des Metallschlauches 5 axial zusammengedrückt sind. Auf diese Weise ergibt sich an den Endstücken 6 eine besonders dichte Materialpackung und damit eine hohe Stabilität.

Zur Herstellung der genannten Ausbildung kann der Metallschlauch 5 vor seinem Einsetzen in den Balg 2 bezüglich der Endstücke 6 in gestauchtem Zustand vorgefertigt sein. Andererseits besteht aber grundsätzlich genausogut die Möglichkeit, den Metallschlauch 5 in den Balg 2 einzustecken, um dann sowohl Metallschlauch 5 als auch Balg 2 axial zusammenzudrücken und dann die Aufweitung der Endstücke 6 sowie deren Verpressen mit den Balganschlußstücken 3 und den Stützringen 7 vorzunehmen. Die Anschlagkante "8" und damit die Länge des Endstückes 6 kann größer als die axiale Länge der Balganschlußenden 3 sein, wie dies in der Zeichnung auf der linken Seite des Metallschlauches 5 ersichtlich ist. Diese Ausbildung führt zu einer besonderen Schonung des benachbarten Endes des Balges 2.

Die Fig. 2 bis 4 zeigen in vergrößerter Form die Einzelheiten II bis IV aus Fig. 1. Dabei lassen die Fig. 3 und 4 erkennen, daß der Balg auch als mehrlagiger Balg ausgebildet sein kann. Soweit ein radialer Abstand zwischen jeweiligem Stützring 7 und Geflechtsschlauch 12 ersichtlich ist, hat dies nur Bedeutung im Rahmen der durch die Zeichnung gegebenen Vereinfachung und soll die Dicke des Geflechtsschlauches wiedergeben.

Fig. 2 zeigt noch die Mitte des Metallschlauches, wobei ersichtlich ist, daß der Metallschlauch eine soweit zusammengeschobene Lage im Einbauzustand haben kann, daß er eine erhöhte Bewegungsdämpfung liefert und andererseits auch das Maß der axialen Zusammenschiebbarkeit und damit der axialen Verkürzung des Leitungselementes bestimmen bzw. begrenzen kann.

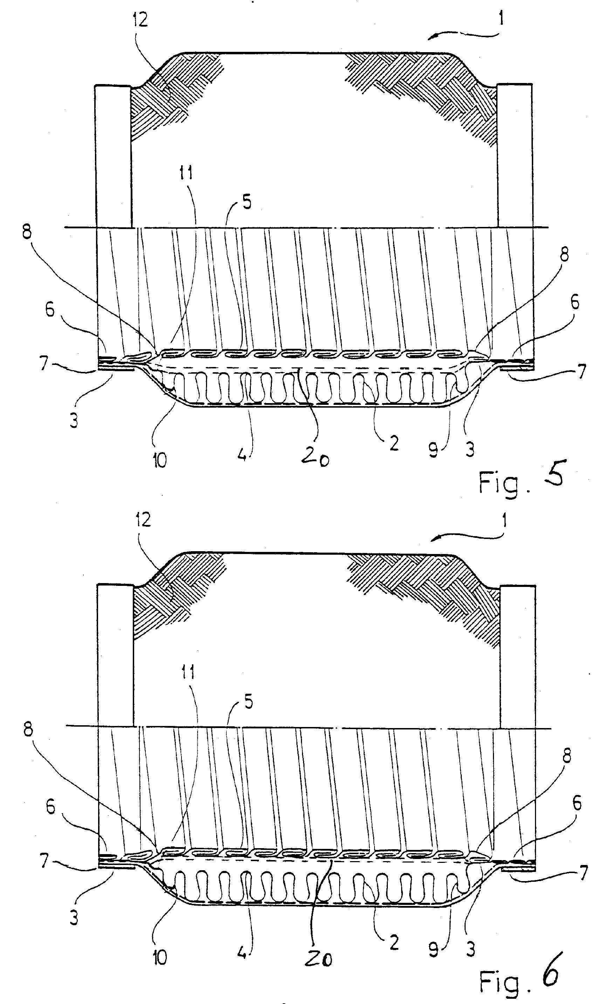

Soweit vorstehend das Leitungselement anhand der Fig. 1 bis 4 beschrieben ist, entspricht es der älteren Patentanmeldung P 39 24 697.3. Die bisher verwendete Bezifferung ist bei den weiteren Fig. 5 bis 10 beibehalten, ohne daß insoweit der Gegenstand der älteren Anmeldung noch einmal im einzelnen wiederholt beschrieben ist.

Wie aus Fig. 1 ersichtlich, ist nun in den Abstandsraum zwischen Metallbalg 2 und Agraffschlauch 5 ein Geflechtsschlauch 20 eingebracht, der mit seinen beiden Enden zwischen den Enden des Metallbalges 2 und den Enden des Agraffschlauches 5 eingefangen und damit festgelegt ist, ohne daß im übrigen die vorher beschriebene Ausbildung dieser Enden dadurch beeinträchtigt wäre.

Dieser zweite Geflechtsschlauch 20 nimmt im normalen Zustand des Leitungselementes 1 die in Fig. 1 und vergleichsweise auch in den Fig. 2 bis 4 ersichtliche Position ein, nämlich dann, wenn sich das Leitungselement 1 in gestrecktem Zustand befindet so, daß der erste Geflechtsschlauch 12 sich von außen in Anlage an den Metallbalg 2 befindet und damit die axiale, gestreckte Länge des Leitungselementes 1 bestimmt. Dabei ist der zweite Geflechtsschlauch 20 in losem bzw. entspanntem Zustand.

Findet nun beispielsweise eine betriebsbedingte Steuerung des Leitungselementes 1 statt, so wird der zweite Geflechtsschlauch 20 zusammengeschoben, was vermöge seiner konstruktiven Eigenheiten, die an sich bekannt sind, dazu führt, daß er sich tonnenförmig aufstaucht und dadurch mit seinem Außenumfang in Anlage an die Innenkrempen des Metallbalges 2 gerät, wie dies in Fig. 5 dargestellt ist. Dadurch ergibt sich ein Reibungsverbund zwischen Metallbalg 2 und zweitem Geflechtsschlauch 20, der zu einer zusätzlichen Dämpfung innerhalb des Leitungselementes 1 führt.

Findet eine angulare Verstellung der Enden des Leitungselementes 1 statt, so geht damit einher eine Längenverkürzung zwischen den Anschlußenden auf der Innenseite des dann durch das Leitungselement gebildeten Bogens, während auf der Außenseite eines solchen Bogens eine entsprechende Längenvergrößerung stattfindet bzw. eintreten will. Dies führt dazu, daß auf der Außenseite eines solchen Bogens der zweite Geflechtsschlauch 20 in Anlage an den Metallschlauch 5 gelangt, wie dies aus Fig. 6 ersichtlich ist, während er auf der Innenseite des Bogens durch Aufstauchen in Anlage an die Innenkrempen des Metallbalges 2 kommt, wie dies Fig. 5 zeigt.

Auch hiermit ist noch einmal verdeutlicht, wie durch den zweiten Geflechtsschlauch 20 eine zusätzliche Reibung und Dämpfung gegenüber dem Metallbalg 2 und dem Metallschlauch 5 erzielt ist.

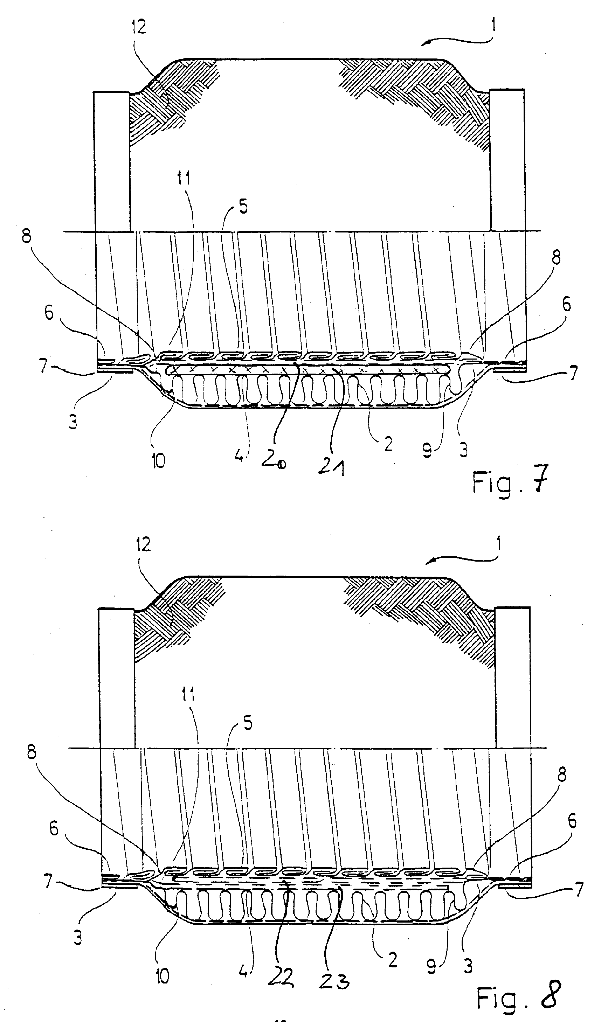

Fig. 7 zeigt in weiterer Ausgestaltung ein Beispiel dafür, wie zwischen dem zweiten Geflechtsschlauch 20 und dem Metallbalg 2 eine hohlzylindrische Zwischenlage 21 aus Metalldrahtgestricke, -gewirke oder dergleichen angeordnet sein kann, um die radiale Beweglichkeit des zweiten Geflechtsschlauches 20 zu begrenzen und gleichzeitig die dämpfende Wirkung dieses zweiten Geflechtsschlauches zu erhöhen, wobei zusätzlich eine Wärmedämmung zwischen innerem Metallschlauch 5 und äußerem Metallbalg 2 eintritt.

Selbstverständlich besteht in Abwandlung zum Gegenstand der Fig. 7 auch die Möglichkeit, eine Zwischenlage 21 der dargestellten Art zwischen zweitem Geflechtsschlauch 20 und Metallschlauch 5 anzuordnen.

Fig. 8 zeigt eine Abwandlung gegenüber den bisherigen Ausführungsformen, die darin besteht, daß von den beiden Anschlußenden des Leitungselementes 1 ausgehend zwei Geflechtsschläuche 22, 23 den zweiten Geflechtsschlauch bilden, wobei der Geflechtsschlauch 22 bezogen auf Fig. 8 am rechten Anschlußende des Leitungselementes 1 festgelegt ist, während der Geflechtsschlauch 23 am linken Ende des Leitungselementes 1 dort zwischen dem Metallschlauch 5 und dem Balg 2 eingefangen ist. Die Geflechtsschläuche 22, 23 überdecken sich in Axialrichtung über den wesentlichen Längenbereich des Leitungselementes 1, wobei jedoch ihre freien Enden jeweils vor dem benachbarten Anschlußende des Leitungselementes 1 liegen.

Diese Konstruktion hat die Wirkung, daß die Geflechtsschläuche 22, 23, die sich in gegenseitiger Anlage befinden, ausgehend von ihrer jeweiligen Anbindung an die Enden des Leitungselementes bei Axialbewegungen zwischen den Enden des Leitungselementes axialkraftbeaufschlagt sind und dadurch den Gesetzmäßigkeiten von Geflechtsschläuchen folgend "Atmungsbewegungen" in Form von radialen Reduktionen bzw. Vergrößerungen ausführen, womit sich eine dämpfende und reibende Wirkung zwischen den Geflechtsschläuchen 22, 23 ergibt. Dazu kommen bei Winkelbewegungen zwischen den Enden des Leitungselementes Verlagerungen der Geflechtsschläuche 22, 23 nach Art der in den Fig. 5 und 6 beschriebenen Weise, also dämpfende Anlagen der Geflechtsschläuche an dem Metallschlauch 5 und/oder Metallbalg 2.

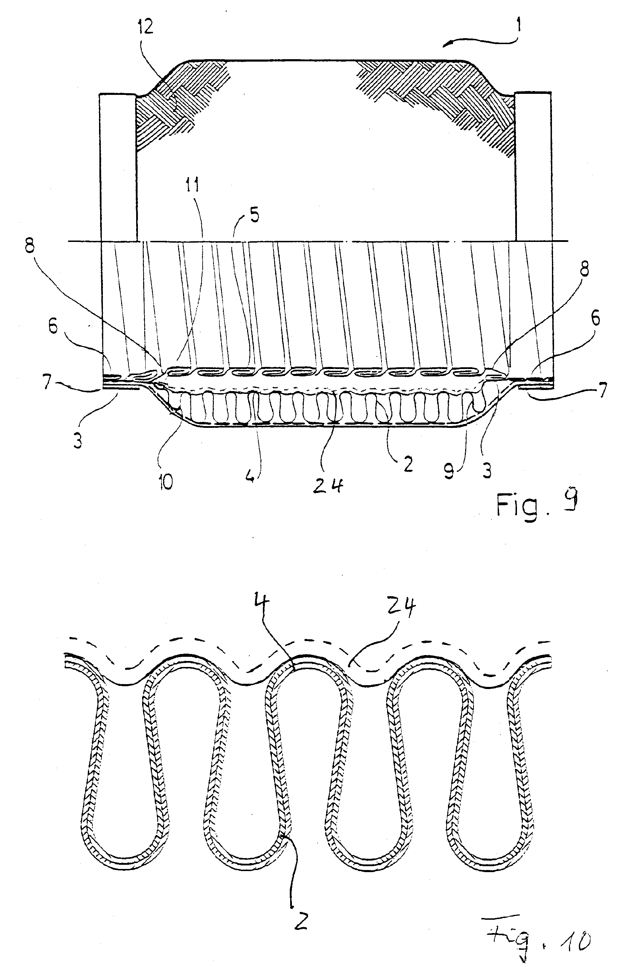

Schließlich zeigen die Fig. 9 und 10 noch eine weitere Variante, gemäß der der zweite Geflechtsschlauch 24 in der Weise, wie sie anhand der Fig. 1 bis 6 beschrieben ist, mit beiden Enden an den Anschlußenden des Leitungselementes 1 eingefangen ist, andererseits aber mit seiner Außenkontur in die nach innen ragenden Balgwellen 4 des Metallbalges 2 teilweise eingeformt ist. Damit ergibt sich ein ständiger Reibverbund zwischen zweitem Geflechtsschlauch 24 und Metallbalg 2, dessen Dämpfungswirkung durch die Erhöhung der Anlagefläche zwischen diesen beiden Bauteilen vergrößert ist.

## Patentansprüche

1. Flexibles Leitungselement (1) für Abgasleitungen von Verbrennungsmotoren bei Kraftfahrzeugen mit einem mit zylindrischen Anschlußenden (3) versehenen, schraubengangförmig oder ringgewellten Balg (2) aus Metall und einem den Balg unmittelbar umgebenden ersten Geflechtsschlauch (12) aus Metalldraht, wobei gegebenenfalls Balg (2) und erster Geflechtsschlauch (12) endständig zur Bildung der Anschlußenden des Leitungselementes (1) innerhalb eines zylindrischen Stützringes (7) miteinander und mit diesem verpreßt und die Teile gegenseitig durch Anheften verbunden sind, und mit einem koaxial innerhalb des Balges angeordneten, gegebenenfalls ohne Dichtungseinlage gewickelten Metallschlauch (5), dessen Außenquerschnitt kleiner als der lichte Innenquerschnitt des Balges (2) ist und der an seinen innerhalb der Balganschlußenden gelegenen und mit diesen bündig abschließenden Endstücken unter Zusammdrücken des Schlauchprofils und Ausgleich der Toleranzen gegenüber den Balganschlußenden radial aufgeweitet ist, wobei
zwischen Balg (2) und Metallschlauch (5) wenigstens ein zweiter Geflechtsschlauch (20, 22, 23, 24) angeordnet und mit wenigstens einem seiner Enden innerhalb des zugeordneten Balganschlußendes festgelegt ist.

2. Leitungselement nach Anspruch 1
dadurch gekennzeichnet,
daß der zweite Geflechtsschlauch (20) zwischen Balg (2) und Metallschlauch (5) lose eingelegt und mit seinen beiden Enden innerhalb des jeweils zugeordneten Balganschlußendes festgelegt ist.

3. Leitungselement nach Anspruch 1,
dadurch gekennzeichnet,
daß der zweite Geflechtsschlauch aus zwei koaxial ineinander angeordneten, sich in Axialrichtung weitgehend überdeckenden und aneinander anliegenden Geflechtsschläuchen (22, 23) gebildet ist, von denen jeder mit einem seiner Enden an gegenüberliegenden Enden des Leitungselementes festgelegt ist.

4. Leitungselement nach einem der vorhergehenden Ansprüche,
dadurch gekennzeichnet,
daß der zweite Geflechtsschlauch (24) in die Wellen des Balges (2) teilweise eingeformt ist.

5. Leitungselement nach einem der vorhergehenden Ansprüche,
dadurch gekennzeichnet,
daß zwischen zweitem Geflechtsschlauch (20, 22, 23) und/oder Balg (2) bzw. Metallschlauch (5) eine hohlzylindrische Zwischenlage (21) aus Metalldrahtgestricke, -gewirke oder dergleichen angeordnet ist.

6. Leitungselement nach einem der vorhergehenden Ansprüche,
dadurch gekennzeichnet,
daß der Metallschlauch (5) ein Agraffschlauch ist.

## Claims

1. A flexible pipe element (1) for exhaust gas ducts of motor vehicle internal combustion engines, comprising a helically shaped or annularly corrugated metallic bellows (2) provided with cylindrical end couplings (3) and a first braided hose (12) made of metallic wire and directly surrounding the bellows, wherein optionally the ends of the bellows (2) and the first braided hose (12) are each pressed to the other and are also pressed together with the inside of and within a cylindrical support ring (7) in order to form the end couplings of the pipe element (1), and the parts are connected together by pinning, and a metallic hose (5) arranged co-axially within the bellows and optionally wound without a sealing insert, the outer cross-section of the metallic hose being smaller as the clear internal cross-section of the bellows (2), and wherein the end pieces of the metallic hose are laid within and close flush the end couplings of the bellows; the metallic hose being radially widened under compression of the hose profile and equalisation of the tolerances relative to the end couplings of the bellows, wherein at least one second braided hose (20, 22, 23, 24) is arranged between the bellows (2) and the metallic hose (5) and at least at one of its ends is fixed within the associated end coupling of the bellows.

2. Pipe element according to claim 1, characterised in that the second braided hose (20) is laid loosely between the bellows (2) and the metallic hose (5) and is fixed at both of its ends within the respective associated end coupling of the bellows.

3. Pipe element according to claim 1, characterised in that the second braided hose is formed from two mutually coaxially arranged braided hoses (22, 23) which extensively axially overlap each other and bear against each other, each hose being fixed with its end to the opposite end of the pipe element.

4. Pipe element according to any one of the preceding claims, characterised in that the second braided hose (24) is partially moulded into the corrugations of the bellows (2).

5. Pipe element according to any one of the preceding claims, characterised in that a hollow cylindrical intermediate layer (21) made from a knitted metallic wire mesh, cloth or the like is arranged between the second braided hose (20, 22, 23) and/or the bellows (2) and the metallic hose (5).

6. Pipe element according to any one of the preceding claims, characterised in that the metallic hose (5) is hose made up of interlocked elements.

## Revendications

1. Elément de conduit (1) flexible pour conduits de gaz d'échappement de moteurs à combustion interne pour véhicules automobiles, comportant un soufflet (2) en métal, ondulé annulairement ou en forme d'hélice, et un premier tuyau souple (12) en fil métallique, en forme de grillage entourant directement le soufflet (2), le soufflet (2) et le premier tuyau souple (12) étant, en vue de la formation en phase finale du raccord de l'élément de conduit (1), pressés l'un contre l'autre à l'intérieur d'un anneau de soutien cylindrique (7) ainsi qu'avec ce dernier, les parties réciproques étant reliées l'une contre l'autre par des attaches, et comportant un tuyau métallique (5) disposé coaxialement à l'intérieur du soufflet (2), rubanné le cas échéant sans couche d'étanchéification, dont la section transversale extérieure est inférieure à la section transversale intérieure du soufflet (2), et qui est élargi radialement dans la limite des tolérances vis-à-vis des extrémités de raccordement du soufflet, au niveau de ses extrémités disposées aux extrémités de raccordement du soufflet et affleurant par rapport à ces dernières, sous l'action de la poussée du profil du tuyau, au moins un deuxième tuyau flexible en forme de grillage (20, 22, 23, 24) étant disposé entre le soufflet (2) et le tuyau métallique (5), et étant immobilisé à l'intérieur de l'extrémité de raccordement du soufflet au moyen d'au moins l'une de ses extrémités.

2. Elément de conduit selon la revendication 1, caractérisé en ce que le deuxième tuyau flexible en forme de grillage (20) est disposé de façon lâche entre le soufflet (2) et le tuyau métallique (5), et se trouve immobilisé au moyen de ses deux extrémités à l'intérieur de l'extrémité correspondante de raccordement du soufflet.

3. Elément de conduit selon la revendication 1, caractérisé en ce que le deuxième tuyau flexible en forme de grillage est formé de deux tuyaux en forme de grillage (22, 23) disposés de manière coaxiale l'un dans l'autre, se recouvrant largement dans la direction axiale et accolés l'un à l'autre, tuyaux dont chacun est immobilisé au moyen d'une de ses deux extrémités sur l'extrémité lui faisant face de l'élément de conduit.

4. Elément de conduit selon l'une des revendications précédentes, caractérisé en ce que le deuxième tuyau flexible en forme de grillage (24) est inséré partiellement dans les orifices du soufflet (2).

5. Elément de conduit selon l'une des revendications précédentes, caractérisé en ce qu'est disposé entre le deuxième tuyau flexible (20, 22, 23) et/ou le soufflet (2) ou respectivement le tuyau métallique (5), une couche intermédiaire creuse cylindrique (21) formée d'un réseau ou d'un tissu de fils métalliques ou analogues.

6. Elément de conduit selon l'une des revendications précédentes, caractérisé en ce que le tuyau métallique (5) est un tuyau à agrafes.
